# EUROPÄISCHE PATENTSCHRIFT

(11) **EP 3 663 800 B1**
(45) Veröffentlichungstag und Bekanntmachung des Hinweises auf die Patenterteilung: **27.01.2021**
(21) Anmeldenummer: 18209852.5
(22) Anmeldetag: 03.12.2018
(51) Int. Cl.: G01S 17/89, G01S 17/931, G01S 7/48, G05D 1/02, G06K 9/00, G06T 7/11, G06T 7/136, G06T 7/194, G06T 5/00

(54) **VERFAHREN ZUR OBJEKTERFASSUNG MIT EINER 3D-KAMERA**
METHOD FOR DETECTING OBJECTS USING A 3D CAMERA
PROCÉDÉ DE DÉTECTION D'OBJET À L'AIDE D'UNE CAMERA TRIDIMENSIONNELLE

(43) Veröffentlichungstag der Anmeldung: 10.06.2020
(73) Patentinhaber: SICK AG, 79183 Waldkirch (DE)
(72) Erfinder: Müncher, Martin, 79261 Gutach im Breisgau (DE); Dulat, Simon, 79211 Denzlingen (DE); Zimmermann, Ralf, 79331 Teningen (DE); Mabon, Remi, 79183 Waldkirch (DE); Daubmann, Michael, 79674 Todtnau (DE); Ruh, Dominic, 79102 Freiburg (DE)
(74) Vertreter: Manitz Finsterwald Patent- und Rechtsanwaltspartnerschaft mbB

(56) Entgegenhaltungen:
- EP-A1- 3 203 412
- US-A1- 2018 227 475
- S. BAHADORI: "Real-time tracking of multiple people through stereo vision", IEE CONFERENCE PUBLICATION, Bd. 2005, 1. Januar 2005 (2005-01-01), Seiten v2-252, XP055591624, GB ISSN: 0537-9989, DOI: 10.1049/ic:20050243

## Beschreibung

Die vorliegende Erfindung betrifft ein Verfahren zur Objekterfassung unter Verwendung eines optischen Sensors, der wenigstens eine 3D-Kamera, bevorzugt eine TOF-(time of flight)-Kamera, bevorzugt mit einer Beleuchtungseinheit und einem Bildsensor aufweist. Der optische Sensor ist vorzugsweise dazu angepasst, in einem Erfassungsbereich der 3D-Kamera Objekte auf der Grundlage von Messwerten des Erfassungsbereichs zu erfassen, wobei die Messwerte bevorzugt separat für einzelne Bildpunkte des Bildsensors ermittelt werden.

Solche Verfahren zur Objekterfassung werden in vielen Bereichen eingesetzt, beispielsweise zu Absicherung von industriellen Anlagen oder zur Steuerung von autonomen Fahrzeugen.

Eine Herausforderung dieser Art der Objekterfassung liegt einerseits in den von der 3D-Kamera gelieferten umfangreichen und komplexen Messdaten, deren Verarbeitung dementsprechend einen hohen Rechenaufwand erfordert. Hierzu widerstreitend muss die Objekterfassung allerdings möglichst zügig und idealerweise in Echtzeit erfolgen. Diese Anforderung besteht beispielsweise in sicherheitskritischen Anwendungen, wie etwa der Steuerung eines autonomen Fahrzeugs in Abhängigkeit von Objekten in der Umgebung des Fahrzeugs. Andererseits muss in derartigen Anwendungen auch eine besonders hohe Erfassungszuverlässigkeit eingehalten werden, sodass Fehlsteuerungen, insbesondere Kollisionen mit Objekten mit an Sicherheit grenzender Wahrscheinlichkeit ausgeschlossen werden können. Eine besondere Herausforderung stellen auch wechselnde Umgebungen mit variablen Lichtverhältnissen dar.

Die Veröffentlichung "Real-Time Tracking of Multiple People through Stereo Vision" von S. Bahadori et al., IEE Conference, 2005 offenbart ein stereoskopisches Trackingsystem für Personen, die durch modellgestützte Hintergrund-Vordergrund-Bildverarbeitung detektiert werden. Es wird jedoch keine 3D-Kamera mit einer Beleuchtungseinheit eingesetzt. Es werden auch keine Distanzwerte bei selektivem Einsatz einer Beleuchtungseinheit ermittelt.

EP 3 203 412 A1 offenbart ein Verfahren zur Detektion von Handgesten in einem dreidimensionalen Raum. Hierzu werden Bilddaten einer Segmentierung unterworfen, wobei ein Hintergrundmodell zum Einsatz gelangt, um Objekte im Vordergrund zu detektieren.

Es ist eine Aufgabe der Erfindung ein zuverlässiges und schnelles Verfahren zur Objekterfassung zu schaffen.

Die Aufgabe wird gelöst durch ein Verfahren mit den Merkmalen des Anspruchs 1.

Ein Verfahren zur Objekterfassung weist zumindest folgende Schritte auf: (i) Bestimmen von Objekterfassungsdaten umfassend zumindest Messwerte des Erfassungsbereichs, die ermittelt werden, wenn sich Objekte in dem Erfassungsbereich befinden und der Erfassungsbereich bevorzugt von einer von der Beleuchtungseinheit ausgesandten Strahlung beaufschlagt ist; (ii) Bestimmen von Referenzerfassungsdaten umfassend zumindest Messwerte des Erfassungsbereichs, die ermittelt werden, wenn sich kein Objekt in dem Erfassungsbereich befindet und/oder der Erfassungsbereich im Wesentlichen nicht von einer von der Beleuchtungseinheit ausgesandten Strahlung beaufschlagt ist; und (iii) Ermitteln von Modellobjekten auf der Grundlage der Objekterfassungsdaten und der Referenzerfassungsdaten, um Objekte im Erfassungsbereich zu erfassen, wobei ein jeweiliges Modellobjekt ein jeweiliges Objekt im Erfassungsbereich repräsentiert.

Ein Aspekt des Verfahrens besteht darin, dass neben Objekterfassungsdaten, welche die Information über eventuell im Erfassungsbereich befindliche Objekte enthalten, Referenzerfassungsdaten herangezogen werden. Die Referenzerfassungsdaten können in regelmäßigen oder unregelmäßigen zeitlichen Abständen erfasst werden und dienen im Wesentlichen dazu, eine hohe Erfassungszuverlässigkeit zu gewährleisten. Daneben erlaubt der Einsatz von Referenzerfassungsdaten auch eine schnellere Auswertung der Objekterfassungsdaten.

Messwerte der Referenzerfassungsdaten können bei ausgeschalteter Beleuchtungseinheit ermittelt werden, d.h. diese Messwerte der Referenzerfassungsdaten repräsentieren eine "Hintergrundbeleuchtung", die häufig variabel ist, z.B. bedingt durch unterschiedlich starkes Tageslicht. Ein variables Umgebungslicht kann somit durch die Referenzerfassungsdaten quantifiziert und dementsprechend bei der Auswertung der Objekterfassungsdaten vorteilhaft berücksichtigt werden, z.B. indem Messwerte in Relation zueinander gesetzt werden, um eine Normalisierung bzw. Kompensation zumindest der interessierenden Messwerte zu erreichen.

Hintergrund- bzw. Umgebungslicht kann bezüglich der Messwerte auch als (Hintergrund-) Rauschen aufgefasst werden, welches die Messwerte der Objekterfassungsdaten gegenüber einer definierten Beleuchtungs-Charakteristik der Beleuchtungseinheit mehr oder weniger verfälscht. Insofern können Messwerte zwischen den Objekterfassungsdaten und den Referenzerfassungsdaten im Sinne eines Signal-zu-Rausch-(SNR)-Verhältnisses zueinander in Beziehung gesetzt werden. Ein SNR-Verhältnis kann insbesondere für einzelne Messwerte bzw. Bildpunkte ermittelt und sodann in die Auswertung der Objekterfassungsdaten einfließen, um die mit der Erfindung verbundenen Vorteile zu mehren, insbesondere die Erfassungszuverlässigkeit zu steigern.

Ein weiterer Aspekt des Verfahrens liegt darin, dass zur Erfassung von Objekten Modellobjekte ermittelt werden. Ein Modellobjekt ist allgemein ein geometrisch definiertes Objekt, welches ein reales Objekt, insbesondere dessen äußere Kontur repräsentiert. Das Modellobjekt ist vorzugsweise durch wenige, z.B. 1 bis 10, vorzugsweise 2 bis 8 Parameter definiert (andere Parameteranzahlen sind möglich) und stellt insofern ein stark vereinfachtes Modell des realen Objekts dar. Beispielsweise kann ein Objekt, dessen Form beliebig komplex sein kann, durch ein geometrisches Standardelement oder einen geometrischen Standardkörper, wie etwa ein Quadrat oder einen Quader, dargestellt werden. Auf diese Weise kann das reale Objekt geometrisch abstrahiert werden, um dessen Komplexität und insbesondere die zur Erfassung des Objekts erforderliche Datenmenge zu reduzieren. Die Ermittlung eines Modellobjekts kann insbesondere durch eine sogenannte BLOB-(binarized large object)-Analyse erfolgen. BLOBs bzw. binäre Datenobjekte sind aus der Bildverarbeitung allgemein bekannt und sind durch zusammenhängende Flächenabschnitte in zweidimensionalen Bildern charakterisiert. Im Rahmen einer BLOB-Analyse können beispielsweise Intensitäts- bzw. Helligkeitswerte von Bildpunkten eines Bildes durch ein Segmentierungsverfahren verarbeitet werden, um einen oder mehrere BLOBs in dem Bild zu ermitteln. Derartige BLOBs können Modellobjekte sein.

Vorzugsweise umfassen die Messwerte, die durch den Bildsensor ermittelt werden, zumindest Distanz- und/oder Intensitätswerte des Erfassungsbereichs. Die Distanzwerte repräsentieren allgemein einen Abstand bzw. eine Distanz zwischen der 3D-Kamera und einem Ortspunkt im Erfassungsbereich. Dieser Abstand kann z.B. durch Messung der Laufzeit eines gepulsten Lichtstrahls (z.B. Laser) von der Beleuchtungseinheit hin zu dem Ortspunkt (Reflexionspunkt) und von dem Ortspunkt zu einem Bildpunkt (Pixel) des Bildsensors ermittelt werden. Zusätzlich oder alternativ kann die Phasenverschiebung eines Lichtstrahls gemessen werden, der diesen Weg nimmt, um hieraus einen Distanzwert zu berechnen. Es kann für jeden Bildpunkt des Bildsensors ein jeweiliger Distanzwert ermittelt werden, um ein ortsaufgelöstes Tiefenbild zu erhalten, welches auch als 3D-Bild oder "3D-Punktwolke" bezeichnet werden kann.

Ein jeweiliger Intensitätswert des Erfassungsbereichs repräsentiert allgemein einen Helligkeitswert, der ebenfalls einem jeweiligen Bildpunkt des Bildsensors zugeordnet und etwa durch eine jeweilige Photodiode erfasst wird. Entsprechend zu den Distanzwerten kann für jeden Bildpunkt ein Intensitätswert ermittelt werden, um ein ortsaufgelöstes Helligkeitsbild des Erfassungsbereichs zu erhalten, welches auch als Amplitudenbild bezeichnet werden kann.

Im Allgemeinen sind die Distanz- und Intensitätswerte jeweils demselben Bildpunkt zugeordnet, durch den die jeweils betreffenden Distanz- und Intensitätswerte ermittelt werden. Distanz- und Intensitätswerte bilden somit einen bzw. mehrere Pixelwerte eines zugeordneten Pixels und repräsentieren einen jeweiligen Ortspunkt im Erfassungsbereich. Die Messwerte können auch als 3D-Punktwolke aufgefasst werden, weil durch die jeweiligen Distanzwerte nicht nur eine zweidimensionale sondern sogar eine dreidimensionale Verteilung von Punkten vorliegt.

Ein weiterer Aspekt der Erfindung ist die Ausnutzung einer breiten Datenbasis für die Erfassung von Objekten. Moderne 3D-Kameras liefern oftmals auch weitere Messwerte oder Kameraparameter, die zur Auswertung von Distanz- und/oder Intensitätswerten nützlich sein können. Beispielsweise können die Objekterfassungsdaten und/oder die Referenzerfassungsdaten auch sekundäre Kameraparameter, insbesondere Betriebsparameter der 3D-Kamera umfassen, die in Abhängigkeit der betreffenden Kamera verschieden sein können. Insbesondere können alle zur Verfügung stehenden Daten der 3D-Kamera zur Erfassung von Objekten herangezogen werden.

Ausführungsformen bzw. beispielhafte Varianten des Verfahrens werden im Folgenden beschrieben und ergeben sich allgemein aus der Beschreibung, den Ansprüchen und den Figuren.

Erfindungsgemäß umfassen die Messwerte der Objekterfassungsdaten Distanzwerte und Intensitätswerte des Erfassungsbereichs, wobei die Messwerte der Referenzerfassungsdaten Referenzdistanzwerte und Referenzintensitätswerte des Erfassungsbereichs umfassen. Die Referenzdistanzwerte werden durch Distanzwerte ermittelt, wenn sich kein Objekt in dem Erfassungsbereich befindet, wobei vorzugsweise der Erfassungsbereich von einer von der Beleuchtungseinheit ausgesandten Strahlung beaufschlagt ist. Die Referenzintensitätswerte werden hingegen durch Intensitätswerte ermittelt, wenn der Erfassungsbereich nicht von einer von der Beleuchtungseinheit ausgesandten Strahlung beaufschlagt ist, wobei sich Objekte in dem Erfassungsbereich befinden können. Allgemein können somit eine oder mehrere Referenzerfassungsbedingungen definiert werden. Eine Referenzerfassungsbedingung kann z.B. für die Referenzintensitätswerte dadurch definiert sein, dass der Erfassungsbereich nicht durch die Beleuchtungseinheit angestrahlt wird. Eine gegebenenfalls gewünschte Absenz von Objekten kann beispielsweise dadurch festgestellt werden, dass in Ermangelung von Objekten auch keine Modellobjekte ermittelt werden können. Es kann hierbei auch zwischen statischen Objekten und dynamischen Objekten unterschieden werden, sodass zur Einhaltung einer Referenzerfassungsbedingung nur auf dynamische Objekte bzw. Modellobjekte abgestellt wird. Es kann allerdings auch gewünscht sein, Referenzintensitätswerte in regelmäßigen zeitlichen Abständen unabhängig davon zu ermitteln, ob sich Objekte im Erfassungsbereich befinden. Eine entsprechende Referenzerfassungsbedingung kann somit wie oben angedeutet vorsehen, dass lediglich die Beleuchtungseinheit inaktiv ist. Eine Feststellung, ob Objekte vorhanden sind, wäre dann nicht notwendig.

Die Referenzintensitätswerte können wiederum zu einer ortsaufgelösten Karte zusammengefasst sein, welches zumindest das Hintergrundlicht repräsentiert, welches den Erfassungsbereich bei ausgeschalteter Beleuchtungseinheit beaufschlagt. Die Referenzintensitätswerte können dann auch als "Rauschkarte" oder "Ambient-Bild" bezeichnet werden. Darüber hinaus können die Referenzintensitätswerte auch im Sinne von herkömmlichen Grauwerten als ein Abbild des Erfassungsbereichs interpretiert werden.

Die Referenzintensitätswerte werden vorzugsweise in regelmäßigen zeitlichen Abständen ermittelt, insbesondere kurz vor oder nach dem Bestimmen von Objekterfassungsdaten. Es können während des Bestimmens der Referenzerfassungsdaten (d.h. während einer Referenzerfassungsbedingung) auch Objekte in dem Erfassungsbereich vorhanden sein, z.B. wenn lediglich Referenzintensitätswerte bestimmt werden.

Nach einer weiteren Ausführungsform werden für zumindest einige Bildpunkte des Bildsensors Relativintensitätswerte bestimmt, die jeweils für den betreffenden Bildpunkt ein Verhältnis zwischen einem Intensitätswert der Objekterfassungsdaten und einem Referenzintensitätswert der Referenzerfassungsdaten repräsentieren. Die Ermittlung des jeweiligen Modellobjekts kann dann vorteilhaft auf relative Objekterfassungsdaten gestützt werden, die auf der Grundlage zumindest einer vorbestimmten Relation von Messwerten zwischen den Objekterfassungsdaten und den Referenzerfassungsdaten und unter Heranziehung der Relativintensitätswerte bestimmt. Bei der vorbestimmten Relation kann es sich insbesondere um eine Differenz oder einen Quotienten handeln, sodass die relativen Objekterfassungsdaten eine Abweichung der Objekterfassungsdaten von den Referenzerfassungsdaten beschreiben. Durch Relativintensitätswerte wird eine SNR-Information und somit ein Maß für das Vertrauen in die "Messgenauigkeit" bei der Ermittlung der Modellobjekte berücksichtigt, um die Erfassungsgenauigkeit zu verbessern bzw. unabhängig von einer jeweiligen Umgebungslichtsituation auf einem im Wesentlichen konstanten Niveau zu halten.

Erfindungsgemäß werden Differenzwerte bestimmt, die jeweils eine Differenz zwischen einem Distanzwert der Objekterfassungsdaten und einem Referenzdistanzwert der Referenzerfassungsdaten repräsentieren, wobei die Ermittlung des jeweiligen Modellobjekts auf die Differenzwerte gestützt wird. Die Differenzwerte bilden vorzugsweise die Grundlage zur Bestimmung der relativen Objekterfassungsdaten oder können unmittelbar durch die Differenzwerte gebildet sein. Hierbei kann es sich zunächst um Rohdifferenzwerte handeln, die zur Reduzierung von unerwünschten Einflüssen gefiltert werden, bevor die eventuell vorhandenen Modellobjekte ermittelt werden. Die Differenzwerte können insbesondere pro Bildpunkt bestimmt werden, z.B. für sämtliche Bildpunkte des Bildsensors. Auf diese Weise kann eine hochaufgelöste Darstellung des Erfassungsbereichs bereitgestellt werden.

Die Differenzwerte können einem ersten Schwellenwertfilter und/oder einem Faltungsfilter unterzogen werden, um die nachfolgende Ermittlung von Modellobjekten im Sinne einer hohen Erfassungspräzision zu verbessern. Hierbei kann das erste Schwellenwertfilter dazu angepasst sein, die Differenzwerte zu binarisieren, d.h. ein jeweiliger Differenzwert wird in Abhängigkeit eines Schwellenwerts entweder auf den Wert Null oder Eins gesetzt. Auf diese Weise kann entschieden werden, ob ein jeweiliger Differenzwert überhaupt zur nachfolgenden Ermittlung von Modellobjekten herangezogen werden soll oder nicht. Eher kleinere Differenzwerte, die beispielsweise aus Messfehlern resultieren können, können durch Binarisierung effizient weggefiltert werden. Es ist jedoch auch möglich, die Differenzwerte durch mehrere Schwellenwertfilter zu verarbeiten, um feinere Kriterien anzulegen. Das Faltungsfilter ist bevorzugt als Glättungsfilter ausgebildet. Auf diese Weise können auch hochfrequente Anteile in den Differenzwerten, die ebenfalls durch unerwünschte Messungenauigkeiten hervorgerufen sein können, reduziert werden. Das Glättungsfilter kann durch einen gleitenden Mittelwert, d.h. durch ein gleitendes Mittelwertfilter realisiert werden.

Erfindungsgemäß werden Relativwerte auf der Grundlage einer vorbestimmten Relation zwischen Messwerten der Objekterfassungsdaten und Messwerten der Referenzerfassungsdaten bestimmt und auf die Differenzwerte angewendet, indem die Differenzwerte mit den Relativwerten gewichtet werden. Bestimmte Informationen, die in den Differenzwerten versteckt oder kodiert sind, werden durch die Relativwerte hervorgehoben. Die Relativwerte können z.B. Relativdistanzwerte umfassen, die jeweils ein Verhältnis zwischen einem Differenzwert und einem Referenzdistanzwert der Referenzerfassungsdaten repräsentieren. Durch Gewichtung der Differenzwerte, bei denen es sich insbesondere um Rohdifferenzwerte handeln kann, mit Relativdistanzwerten können solche Differenzwerte, die stark von einem jeweils zugeordneten Referenzdistanzwert abweichen, in den relativen Objekterfassungsdaten betont, d.h. angehoben werden. Alternativ oder zusätzlich können die Relativwerte Relativintensitätswerte umfassen, die jeweils ein Verhältnis zwischen einem Intensitätswert der Objekterfassungsdaten und einem Referenzintensitätswert der Referenzerfassungsdaten repräsentieren. Durch eine Gewichtung der Differenzwerte mit den Relativintensitätswerten kann eine vorteilhafte Kontrasterhöhung herbeigeführt werden. Die gewichteten Differenzwerte können zudem allgemein so interpretiert werden, dass sie eine Relevanz der zugrundeliegenden Messwerte repräsentieren.

Nach einer weiteren Ausführungsform können die Differenzwerte einem zweiten Schwellenwertfilter unterzogen werden. Dies kann sinnvoll sein, weil die vormals binären Differenzwerte durch die mögliche Glättung und Gewichtung mit Relativwerten wieder einen kontinuierlichen Wertebereich abdecken können, der für die Ermittlung der insbesondere binären Modellobjekte nicht immer besonders vorteilhaft ist. Zu diesem Zweck kann das zweite Schwellenwertfilter vorgesehen werden, welches unterschiedlich zu dem ersten Schwellenwertfilter ausgebildet sein kann. Das zweite Schwellenwertfilter kann auf wenigstens einem Schwellenwert basieren, der konstant oder abhängig von den Objekterfassungsdaten und/oder den Referenzerfassungsdaten und/oder einer Bildpunktposition ist. Mit anderen Worten kann der Schwellenwert vordefiniert oder dynamisch bestimmt werden. Im Hinblick auf eine möglichst schnelle, insbesondere echtzeitfähige Anwendung des Verfahrens ist ein konstanter Schwellenwert bevorzugt. Ferner ist das zweite Schwellenwertfilter vorzugsweise dazu angepasst, die Differenzwerte zu binarisieren.

Die vorstehend genannten Verfahrensschritte bezüglich der Differenzwerte können in der vorstehend genannten Reihenfolge durchgeführt werden. Es sind jedoch auch abweichende Reihenfolgen möglich, wobei auch andere Kombinationen von Verfahrensschritten denkbar sind, die nicht sämtliche der vorstehend genannten Verfahrensschritte oder andere Verfahrensschritte umfassen.

Wie bereits oben angedeutet, können die Differenzwerte jeweils für einen zugeordneten Bildpunkt des Bildsensors bestimmt werden, sodass stets von einem ortsaufgelösten Differenzbild bzw. einer Referenzkarte des Erfassungsbereichs ausgegangen werden kann.

Nach einer weiteren Ausführungsform wird das jeweilige Modellobjekt auf der Grundlage der Differenzwerte ermittelt, wobei die Differenzwerte zu einer Karte (d.h. einem ortsaufgelösten Bild) zusammengefasst sind, die den Erfassungsbereich repräsentiert. Die Karte kann dann einer Clusteranalyse, bevorzugt einem Bildsegmentierungsverfahren unterzogen werden, um das jeweilige Modellobjekt zu ermitteln. Da der Ermittlung von Modellobjekten hierbei Differenzwerte zugrunde gelegt werden, die neben der zweidimensionalen Karte als dritte Dimension Distanzwerte repräsentieren, kann ein jeweiliges Modellobjekt allgemein dreidimensional definiert sein. Wie bereits weiter oben erwähnt kann ein Modellobjekt beispielsweise als Quader ausgebildet sein, wobei zusätzlich zu den klassischen Parametern eines Quaders weitere Parameter zur Definition des Modellobjekts verwendet werden können. Eine etwaige nachfolgende Auswertung mehrerer Modellobjekte kann unter Berücksichtigung zusätzlicher Parameter, welche zusätzlich zu einer geometrischen Definition eines Modellobjekts dienen, vereinfacht oder verbessert werden.

Ein jeweiliger Differenzwert kann auf der Grundlage des zugehörigen Distanzwerts und vordefinierter Kameraparameter (z.B. Einstellwinkel der 3D-Kamera und Anbauhöhe) in einen Raumpunkt umgerechnet werden.

Im Zuge der Ermittlung des jeweiligen Modellobjekts werden die zugrundeliegenden Differenzwerte vorzugsweise binär dahingehend ausgewertet, ob ein betreffender Differenzwert von einem Objekt verursacht worden ist, oder nicht. Sofern ein Differenzwert als von einem Objekt verursacht klassifiziert wird, wird dieser Differenzwert geometrisch regelmäßig innerhalb des Modellobjekts liegen und somit dem Modellobjekt zugeordnet. Das finale Modellobjekt wird dann einen Cluster von Differenzwerten beinhalten, die von dem Modellobjekt umgeben sind. Einzelne Differenzwerte können geometrisch gesehen aber auch außerhalb eines Modellobjekts liegen. Das Modellobjekt kann in tatsächliche Raumgrößen umgerechnet werden, sodass die Größenparameter des Modellobjekts zumindest annähernd mit den Größen des Objekts korrespondieren. Die dem Modellobjekt zugeordneten Differenzwerte können wie erwähnt in Raumpunkte umgerechnet werden, die zumindest überwiegend innerhalb des Modellobjekts liegen.

Ein jeweiliges Modellobjekt kann zumindest durch einige oder ausschließlich durch folgende Parameter definiert sein:
- Position des jeweiligen Modellobjekts;
- wenigstens einen Größenparameter des Modellobjekts;
- minimaler Distanzwert der Bildpunkte, deren Differenzwerte dem jeweiligen Modellobjekt (26, 26') zugeordnet sind und/oder Position eines dem minimalen Distanzwert zugeordneten Raumpunkts (62);
- maximaler Distanzwert der Bildpunkte, deren Differenzwerte dem jeweiligen Modellobjekt (26, 26') zugeordnet sind und/oder Position eines dem maximalen Distanzwert zugeordneten Raumpunkts;
- Position eines einem maximalem Differenzwert zugeordneten Raumpunkts, wobei der maximale Differenzwert dem jeweiligen Modellobjekt (26, 26') zugeordnet ist und eine maximale Differenz zwischen einem Distanzwert der Objekterfassungsdaten und einem Referenzdistanzwert der Referenzerfassungsdaten repräsentiert;
- relative Anzahl von dem jeweiligen Modellobjekt (26, 26') zugeordneten Differenzwerten, die jeweils eine Differenz zwischen einem Distanzwert der Objekterfassungsdaten und einem Referenzdistanzwert der Referenzerfassungsdaten repräsentieren und größer einem vorbestimmten Schwellenwert sind.

Die Position eines einem maximalem Differenzwert zugeordneten Raumpunkts kann aufgrund der hohen Abweichung von den Referenzdaten als besonders relevant für die Objekterfassung angesehen werden, wobei hierfür vorzugsweise das Maximum der Differenzwerte ermittelt wird, die zuvor mit Relativwerten, insbesondere Relativintensitätswerten gewichtet worden sind. Insofern können z.B. Differenzwerte mit einem hohen SNR-Wert für die Auswahl des maximalen Differenzwerts begünstigt werden.

Die relative Anzahl von Differenzwerten "innerhalb des jeweiligen Modellobjekts", die einen Differenzwert größer einem vorbestimmten Schwellenwert aufweisen, kann auch Füllgrad des Modellobjekts bezeichnet werden.

Die Position eines Raumpunkts kann bezüglich eines vorbestimmten Koordinatensystems definiert sein (z.B. ein kartesisches Koordinatensystem).

Auf der Grundlage des jeweiligen Modellobjekts kann ein Bewegungsvektor geschätzt werden, der eine Bewegung des jeweiligen Objekts repräsentiert. Der Bewegungsvektor kann z.B. eine Information über eine Bewegungsgeschwindigkeit des jeweiligen Objekts und/oder eine Bewegungsrichtung des jeweiligen Objekts und/oder einen Abstand, insbesondere eine Abstandsänderung, zwischen dem jeweiligen Objekt und dem optischen Sensor umfassen.

Ein autonomes Fahrzeug kann auf der Grundlage des Bewegungsvektors gesteuert werden. Vorzugsweise wird das Fahrzeug in Abhängigkeit von dem Bewegungsvektor derart gesteuert, dass eine potentielle Kollision durch Anpassen der Fahrzeugbewegung vermieden wird, wobei das Anpassen der Fahrzeugbewegung eine Richtungsänderung und/oder eine Geschwindigkeitsänderung des Fahrzeugs umfassen kann.

Grundsätzlich ist es denkbar, den Bewegungsvektor ausschließlich auf der Grundlage eines einzelnen Modellobjekts zu schätzen, wobei hierfür beispielsweise ein Bewegungsmodell herangezogen werden kann. Vorzugsweise wird jedoch eine zeitliche Folge von Modellobjekten, d.h. eine "Historie" von Modellobjekten berücksichtigt. Der Bewegungsvektor kann z.B. unter Verwendung eines Tracking-Algorithmus, bevorzugt eines Kalman-Filters geschätzt werden.

Ein Tracking-Algorithmus kann dazu angepasst sein, den Bewegungsvektor auf der Grundlage von ein oder mehreren Parametern des jeweiligen Modellobjekts zu berechnen, wobei der Bewegungsvektor eine Bewegung des jeweiligen Objekts bevorzugt ausschließlich in Bezug auf eine definierte Position des jeweiligen Modellobjekts repräsentiert. Bei der definierten Position kann es sich auch um die Position eines Raumpunkts handeln, dem ein maximaler Differenzwert zugeordnet ist.

Die Erfindung bezieht sich ferner auf einen optischer Sensor, der wenigstens eine 3D-Kamera, bevorzugt eine TOF-(time of flight)-Kamera, mit bevorzugt einer Beleuchtungseinheit, einem Bildsensor sowie einer Steuer- und Auswerteeinheit aufweist. Die Steuer- und Auswerteeinheit ist dazu angepasst, das Verfahren nach zumindest einem der vorstehenden Ausführungsformen durchzuführen.

Das Verfahren ist vorzugsweise als sogenannter "one-pass"-Algorithmus implementiert, wobei die Daten des optischen Sensors vorzugsweise genau einmal eingelesen und unter Verwendung einer minimalen Anzahl von Speichervorgängen verarbeitet werden. Ferner ist das Verfahren vorzugsweise unter Verwendung eines field programmable gate arrays (FPGA) implementiert. Neben einer besonders schnellen Durchführung des Verfahrens können auf diese Weise auch erhöhte Sicherheitsanforderungen an das Verfahren erfüllt werden.

Die Erfindung bezieht sich ferner auf ein autonomes Fahrzeug mit einem optischen Sensor, der insbesondere dem vorstehend beschriebenen optischen Sensor entsprechen kann. Das Fahrzeug weist eine Antriebssteuerung auf, die dazu angepasst ist, das Fahrzeug unter Berücksichtigung von den etwaig ermittelten Modellobjekten zu steuern und beispielsweise die durch die Modellobjekte repräsentierten Objekte zu umfahren oder, falls notwendig, eine Bremsung einzuleiten.

Die Erfindung wird nachfolgend lediglich beispielhaft anhand der Zeichnungen erläutert, in denen:
- Fig. 1: schematisch ein autonomes Fahrzeug mit einem optischen Sensor zur Erfassung von Objekten zeigt;
- Fig. 2: perspektivisch ein weiteres autonomes Fahrzeug mit einem optischen Sensor zur Erfassung von Objekten zeigt;
- Fig. 3: ein Ablaufdiagramm zur Veranschaulichung eines Algorithmus zur Ermittlung von Modellobjekten zeigt;
- Fig. 4: eine schematische Visualisierung von Parametern eines Modellobjekts zeigt;
- Fig. 5: eine schematische Visualisierung eines "Füllgrad"-Parameters eines Modellobjekts zeigt, wobei Fig. 5a ein Modellobjekt mit einem hohen Füllgrad und Fig. 5b ein Modellobjekt mit einem geringen Füllgrad zeigt;
- Fig. 6: das Fahrzeug von Fig. 1 zeigt, welches in Abhängigkeit einer Bewegungsbahn eines Objekts gesteuert wird.

In den Figuren sind ähnliche oder sich entsprechende Elemente mit denselben Bezugszeichen gekennzeichnet.

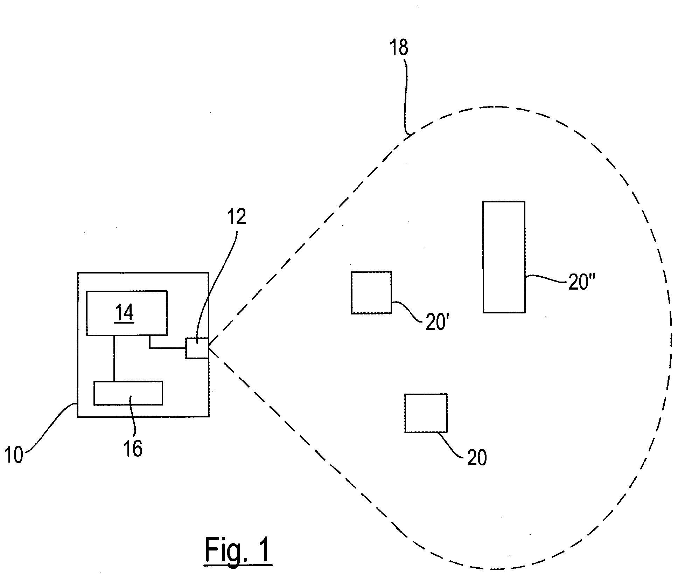

Fig. 1 zeigt schematisch ein autonomes Fahrzeug 10, welches einen optischen Sensor 12, eine Antriebssteuerung 16 für das Fahrzeug 10 sowie eine Steuer- und Auswerteeinheit 14 aufweist, die mit dem optischen Sensor 12 und der Antriebssteuerung 16 verbunden ist. Der optische Sensor 12 umfasst eine TOF-(time-of-flight)-Kamera mit einem Bildsensor sowie einer Beleuchtungseinheit (nicht gezeigt). Der optische Sensor 12 ist dazu angepasst, Messwerte eines mittels einer gestrichelten Linie angedeuteten dreidimensionalen Erfassungsbereichs 18 zu ermitteln. Auf der Grundlage der ermittelten Messwerte werden dann unter Verwendung der Steuer- und Auswerteeinheit 14 Objekte 20, 20', 20" erfasst, die sich in dem Erfassungsbereich 18 befinden. Die in Fig. 1 schematisch angedeuteten Objekte 20, 20', 20" können grundsätzlich beliebig geformt und in dem Erfassungsbereich 18 angeordnet sein. Es ist auch möglich, dass sich noch weitere Objekte oder auch keine Objekte in dem Erfassungsbereich 18 befinden. Die Beleuchtungseinheit (nicht gezeigt) ist in den optischen Sensor 12 integriert und dient dazu, den Erfassungsbereich 18 zu beleuchten, um präzisere Messwerte zu erhalten. Insbesondere kann der Erfassungsbereich 18 beleuchtet werden, wenn sich die Objekte 20, 20', 20" in dem Erfassungsbereich 18 befinden und zu deren Erfassung Distanz- und Intensitätswerte ermittelt werden. Dies wird nachfolgend noch genauer erläutert.

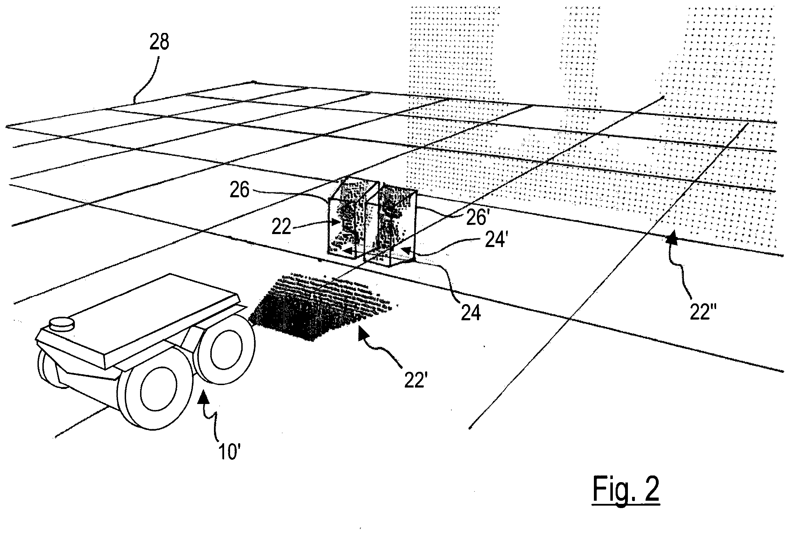

In Anlehnung an das anhand von Fig. 1 erläuterte Erfassungsszenario ist in Fig. 2 eine Perspektivansicht auf ein autonomes Fahrzeug 10' gezeigt, welches entsprechend zu dem autonomen Fahrzeug 10 von Fig. 1 ausgebildet ist. Das autonome Fahrzeug 10' befindet sich auf einem kariert angedeuteten Boden 28. Der optische Sensor 12 des Fahrzeugs 10', der in Fig. 2 nicht gezeigt ist, liefert eine Vielzahl von Messwerten 22 (oder Messpunkten), die jeweils einen Punkt im Raum (Raumpunkt) repräsentieren und in Fig. 2 als 3D-Punktwolken angedeutet sind.

Die Messwerte 22 umfassen Distanzwerte, die jeweils einen Abstand zwischen dem optischen Sensor 12 und einem (Reflexions-)punkt im Raum angeben. Die zweidimensionale Verteilung der Messwerte 22 in Fig. 2 ergibt sich aus einer zweidimensionalen Erstreckung des Bildsensors der in den optischen Sensor 12 integrierten TOF-Kamera, die vorzugsweise mit einer Optik ausgestattet ist (nicht gezeigt). Anstelle eines im Wesentlichen quadratischen Bildsensors sind aber auch andere Anordnungen von Photodioden denkbar, z.B. linear angeordnete Photodioden.

Eine erste Gruppe von Messwerten 22' weist relativ kurze Distanzwerte auf, sodass sich die entsprechenden Punkte im Raum relativ nah vor dem Fahrzeug 10' befinden (Fig. 2). Eine weitere Gruppe von Messwerten 22" besitzt relativ große Distanzwerte, sodass sich die entsprechenden Punkte im Raum vergleichsweise weit vor dem Fahrzeug 10' befinden (vgl. auch Fig. 2). Die Messwerte 22" sind auf einen vordefinierten Maximalwert beschränkt. Die zwischen den "nahen" Messwerten 22' und den "fernen" Messwerten 22" befindlichen Messwerte 22 sind durch zwei benachbart zueinander angeordneten menschliche Beine 24, 24' verursacht und bilden dementsprechend zwei Cluster von Messwerten 22. Die Beine 24, 24' sind in Fig. 2 nur durch verursachten Messwerte 22 angedeutet. Im Zuge einer nachfolgend noch genauer erläuterten Auswertung der Messwerte 22 wird für jedes Cluster bzw. jedes Bein 24, 24' ein Modellobjekt 26, 26' ermittelt, welches ein jeweils zugrunde liegendes Objekt, im vorliegenden Fall also ein jeweiliges Bein 24, 24' repräsentiert. Auf diese Weise werden Objekte erfasst.

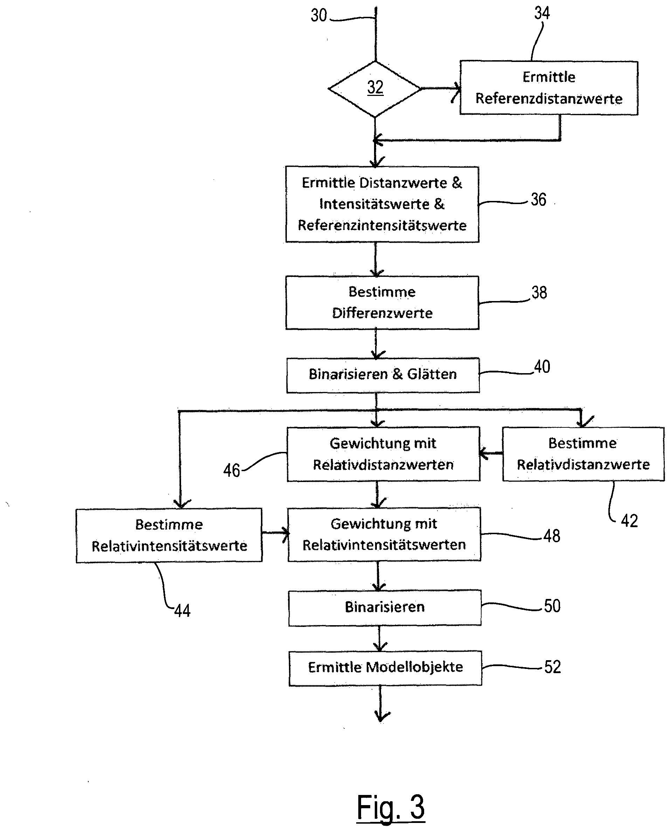

Ein Verfahren zur Erfassung von Objekten wird nachfolgend anhand von Fig. 3 erläutert. Das Verfahren beginnt bei der Bezugsziffer 30. Im Entscheidungspunkt 32 wird überprüft, ob Referenzdistanzwerte vorliegen oder nicht. Sofern Referenzdistanzwerte nicht vorliegen, werden diese in Schritt 34 ermittelt. Die Referenzdistanzwerte werden vorzugsweise unter einer Referenzerfassungsbedingung ermittelt, wobei sichergestellt wird, dass sich keine dynamischen Objekte in dem Erfassungsbereich 18 befinden und dieser während der Erfassung der Referenzdistanzwerte durch die Beleuchtungseinheit beleuchtet wird. Sofern im Entscheidungspunkt 32 festgestellt wird, dass die Referenzdistanzwerte bereits vorliegen, wird direkt mit Schritt 36 fortgefahren. In Schritt 36 werden allgemein Objekterfassungsdaten sowie weitere Referenzerfassungsdaten (zusätzlich zu den Referenzdistanzwerten) bestimmt. Insbesondere werden in Schritt 36 Distanzwerte, Intensitätswerte sowie Referenzintensitätswerte des Erfassungsbereichs 18 ermittelt. In Schritt 38 werden sodann Differenzwerte bestimmt, die jeweils für einen Bildpunkt eine Differenz zwischen einem Distanzwert und einem Referenzdistanzwert repräsentieren und dementsprechend auch als Differenzdistanzwerte bezeichnet werden können. In Schritt 40 werden die Differenzwerte einem ersten Schwellenwertfilter und einem Glättungsfilter unterzogen, um eine nachfolgende Auswertung der Differenzwerte zu erleichtern.

Das erste Schwellenwertfilter ist vorzugsweise dazu ausgelegt, die Differenzwerte zu binarisieren. Auf der Grundlage der Differenzwerte werden Relativdistanzwerte (Schritt 42) sowie Relativintensitätswerte (Schritt 44) bestimmt. Anstelle der durch Schritt 40 gefilterten Differenzwerte können auch die ungefilterten Differenzwerte verwendet werden. Die Relativdistanzwerte können als Relativdifferenzdistanzwerte ermittelt werden, indem jeweils ein Quotient zwischen den Differenzwerten und den Referenzdistanzwerten berechnet wird. Die Relativintensitätswerte werden vorzugsweise jeweils durch einen Quotienten zwischen den Intensitätswerten und den Referenzintensitätswerten gebildet. Die Relativintensitätswerte repräsentieren ein Signal-zu-Rausch Verhältnis des optischen Sensors 12.

In Schritt 46 werden die ungefilterten Differenzwerte mit den Relativdistanzwerten aus Schritt 42 gewichtet, insbesondere multipliziert. In Schritt 48 werden die Differenzwerte zusätzlich mit den Relativintensitätswerten gewichtet, insbesondere multipliziert. Sodann werden die Differenzwerte durch ein zweites Schwellenwertfilter in Schritt 50 binarisiert. Auf der Grundlage der erhaltenen Differenzwerte werden sodann Modellobjekte in Schritt 52 ermittelt, insbesondere unter Verwendung eines Segmentierungsverfahrens auf der Grundlage der Differenzwerte. Hierbei können auch weitere Daten herangezogen werden, insbesondere unverarbeitete Rohmesswerte des optischen Sensor 12 sowie Einstellungsparameter der TOF-Kamera. Beispielhaft sind in Fig. 2 die Modellobjekte 26, 26' gezeigt, die im Wesentlichen quaderförmig sind.

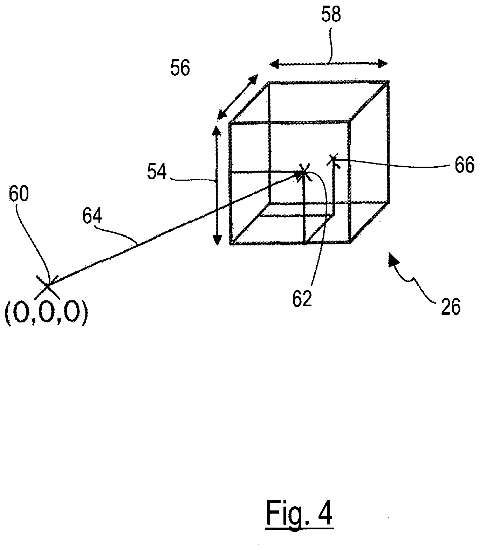

In Fig. 4 ist ein weiteres Modellobjekt 26 gezeigt, welches ebenfalls quaderförmig ausgebildet ist. Sämtliche Differenzwerte, die einem jeweiligen Modellobjekt 26 zugeordnet werden, repräsentieren Punkte, die sich im Wesentlichen innerhalb des Modellobjekts 26 befinden. Das Modellobjekt 26 kann insofern als eine modellierte "Hülle" des zugrundeliegenden Objekts interpretiert werden. Das Modellobjekt 26 kann allgemein durch mehrere geometrische Parameter definiert werden. Insbesondere kann das Modellobjekt 26 durch eine Höhe 54, eine Tiefe 56 und eine Breite 58 definiert sein. Da die Messwerte 22 in Bezug auf den optischen Sensor 12 ermittelt werden, kann als Bezug für das Modellobjekt 26 ein Punkt 60 angegeben werden, der die Position des optischen Sensors 12 als Ursprung eines Koordinatensystems (z.B. 0, 0, 0) angibt. Innerhalb des Modellobjekts 26 wird ein Punkt 62 identifiziert, der einen Messwert mit einer minimalen Distanz zum Punkt 60 aufweist. Die entsprechende Distanz ist durch einen Abstandsvektor 64 angedeutet. Die Position des Punkts 62 kann als weiterer Parameter des Modellobjekts 26 herangezogen werden. Darüber hinaus kann die Position eines Punktes 66 als Parameter für das Modellobjekt 26 herangezogen werden. Der dem Punkt 66 zugrunde liegende Messwert ist vorzugsweise durch einen maximalen Differenzwert gekennzeichnet und stellt insofern einen Messwert dar, der zur Charakterisierung des durch das Modellobjekt 26 zu erfassenden Objekts 24 eine besondere Relevanz besitzt. Im Hinblick auf die Steuerung des autonomen Fahrzeugs 10, 10' können potentielle Kollisionen mit einem Objekt besonders gut verhindert werden, wenn die Position des Punkts 66 als Parameter für das Modellobjekt 26 verwendet wird.

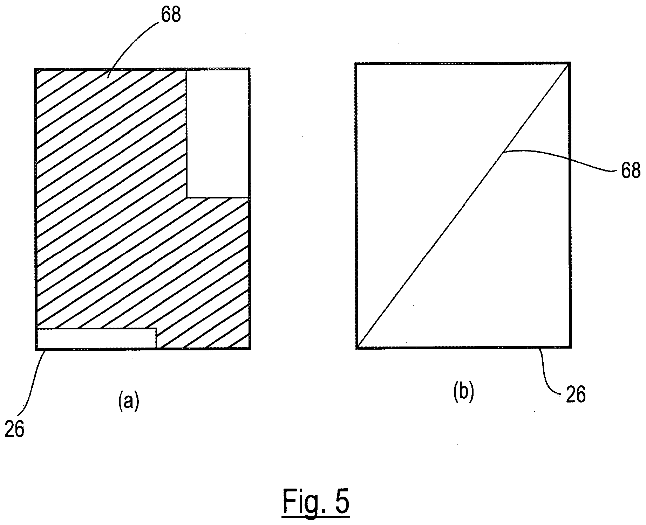

Als weiterer Parameter für das Modellobjekt 26 kann ein Füllgrad definiert werden, dessen Bedeutung in Fig. 5 veranschaulicht ist. Der Füllgrad ist durch die relative Anzahl von Punkten innerhalb des jeweiligen Modellobjekts 26 definiert, die jeweils einen Differenzwert zwischen einem Distanzwert und einem Referenzdistanzwert aufweisen, welcher jeweils größer als ein vorbestimmter Schwellenwert ist. Mit anderen Worten gibt der Füllgrad an, wieviele Messpunkte innerhalb eines Modellobjekts 26 tatsächlich "auf/in dem Objekt liegen", welches durch das Modellobjekt 26 repräsentiert wird. Je höher der Füllgrad, desto eher kann davon ausgegangen werden, dass die Umrisse des Modellobjekts 26 eine tatsächliche Größe oder Form des zu erfassenden Objekts beschreiben. In Fig. 5a ist ein Modellobjekt 26 mit einer hohen relativen Zahl von Punkten 68 gezeigt, die höher als der vorbestimmte Schwellenwert (z.B. Null) sind und dementsprechend zu einem hohen Füllgrad führen. Diese Punkte 68 sind in Fig. 5a durch eine schraffierte Fläche angedeutet. Im Gegensatz hierzu besitzt das in Fig. 5b gezeigte Modellobjekt 26 eine geringe Zahl von solchen Punkten 68, die entlang einer Linie angeordnet sind. Das Modellobjekt 26 beschreibt die Form des Objekts, welches die Punkte 68 "verursacht" hat, somit vergleichsweise rudimentär. Die Berücksichtigung des Füllgrads zur Definition der Modellobjekte 26 führt zu einer zuverlässigeren Steuerung von autonomen Fahrzeugen 10, 10', die in Abhängigkeit solcher Modellobjekte 26 gesteuert werden.

Es versteht sich, dass noch weitere oder andere Parameter zur Definition der Modellobjekte 26 verwendet werden können. Die Modellobjekte 26 führen zu einer signifikanten Datenreduktion gegenüber den zugrundeliegenden Messwerten. Gleichzeitig wird durch ein jeweiliges Modellobjekt 26 ein geometrisch eindeutiger Korridor definiert, aus dem klar hervorgeht, ab wann eine potentielle Kollision mit hoher Wahrscheinlichkeit zu erwarten wäre. Komplexe Objektformen werden somit im Sinne einer zuverlässigen Vermeidung von Objektkollisionen großzügig abstrahiert bzw. modelliert. Als besonders vorteilhaft hat sich erwiesen, wenn durch die beschriebene Parametrierung der Modellobjekte 26 im Wesentlichen quaderförmige Modellobjekte vorgesehen werden.

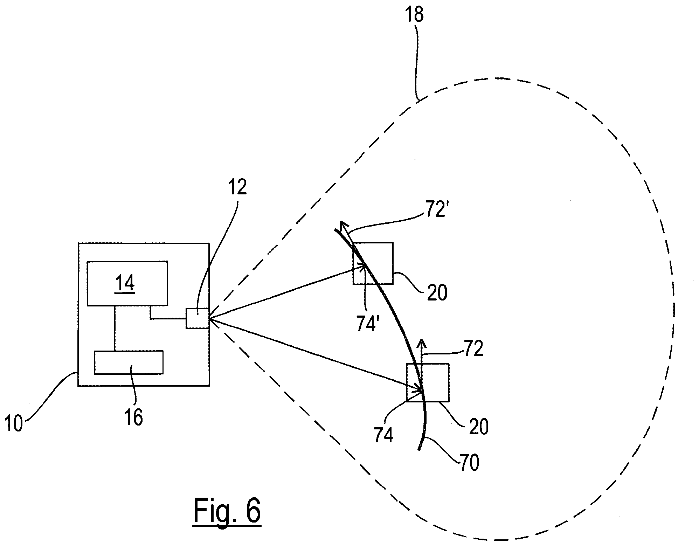

In Fig. 6 ist nochmal das Szenario von Fig. 1 gezeigt, wobei sich im Erfassungsbereich 18 abweichend zu Fig. 1 lediglich ein einzelnes Objekt 20 befindet, welches sich entlang einer Bewegungsbahn 70 bewegt. Das Objekt 20 ist in Fig. 6 zweimal gezeigt, um die Position des Objekts 20 zu zwei verschiedenen Zeitpunkten anzugeben. Für jeden dieser beispielhaften Zeitpunkte wird ein jeweiliges in Fig. 6 nicht explizit dargestelltes Modellobjekt 26 ermittelt, welches das Objekt 20 repräsentiert. Zusätzlich wird ein jeweiliger Bewegungsvektor 72, 72' geschätzt, welcher die temporäre Bewegung des Objekts 20 repräsentiert und vorzugsweise für einen jeweiligen Bezugspunkt 74, 74' definiert ist. Ein jeweiliger Bewegungsvektor 72, 72' kann hierbei auf der Grundlage einer Folge, d.h. einer zeitlichen Abfolge von Modellobjekten 26 geschätzt werden. Die Bewegungsvektoren 72, 72' bilden eine Folge von Bewegungsvektoren auf deren Grundlage die Bewegungsbahn 70 geschätzt werden kann. Die Bewegungsbahn 70 kann extrapolierte oder interpolierte Abschnitte umfassen, sodass die Bewegungsbahn 70 nicht auf diskrete Messzeitpunkte beschränkt ist. Insbesondere kann ein zukünftiger Bewegungsabschnitt des Objekts 20 ermittelt werden, sodass das Fahrzeug 10 vorausschauend eine Kurs- oder Geschwindigkeitsänderung einleiten kann, um eine Kollision mit dem Objekt 20 zu vermeiden. Ferner ist es auch möglich, das Fahrzeug 10 in Abhängigkeit von der Bewegungsbahn 70 anzusteuern, um das Objekt 20 automatisch von dem Fahrzeug 10 verfolgen zu lassen.

### Bezuqszeichenliste

- 10, 10': autonomes Fahrzeug
- 12: optischer Sensor
- 14: Steuer- und Auswerteeinheit
- 16: Antriebssteuerung
- 18: Erfassungsbereich
- 20, 20', 20": Objekt
- 22, 22', 22": Messwerte
- 24, 24': Bein
- 26, 26': Modellobjekt
- 28: Boden
- 30: Beginn des Verfahrens
- 32: Entscheidungspunkt
- 34: Ermittlung von Referenzdistanzwerten
- 36: Ermittlung von Objekt- und Referenzerfassungsdaten
- 38: Bestimmung von Differenzwerten
- 40: Filterung von Differenzwerten
- 42: Bestimmung von Relativdifferenzwerten
- 44: Bestimmung von Relativintensitätswerten
- 46: Gewichtung mit Relativdifferenzwerten
- 48: Gewichtung mit Relativintensitätswerten
- 50: Filterung von gewichteten Differenzwerten
- 52: Ermittlung von Modellobjekten
- 54: Höhe
- 56: Tiefe
- 58: Breite
- 60: Position der 3D-Kamera
- 62: Position eines Punkts mit minimaler Distanz zur Position der 3D-Kamera
- 64: Abstandsvektor
- 66: Position eines Punkts innerhalb des Modellobjekts mit einem maximalen Differenzwert
- 68: Punkte innerhalb des Modellobjekts mit Differenzwerten oberhalb eines Schwellenwerts
- 70: Bewegungsbahn
- 72, 72': Bewegungsvektor
- 74, 74': Bezugspunkt für einen Bewegungsvekor

## Patentansprüche

1. Verfahren zur Objekterfassung unter Verwendung eines optischen Sensors (12), der wenigstens eine 3D-Kamera mit einer Beleuchtungseinheit und mit einem Bildsensor aufweist,
wobei der optische Sensor (12) dazu angepasst ist, in einem Erfassungsbereich (18) der 3D-Kamera Objekte (20, 20', 20", 24, 24') auf der Grundlage von Messwerten (22, 22', 22') des Erfassungsbereichs (18) zu erfassen, wobei die Messwerte (22, 22', 22') separat für einzelne Bildpunkte des Bildsensors ermittelt werden,
wobei das Verfahren zumindest folgende Schritte aufweist:
- Bestimmen von Objekterfassungsdaten umfassend zumindest Messwerte (22, 22', 22') des Erfassungsbereichs (18), die ermittelt werden, wenn sich Objekte (20, 20', 20", 24, 24') in dem Erfassungsbereich (18) befinden und der Erfassungsbereich (18) von einer von der Beleuchtungseinheit ausgesandten Strahlung beaufschlagt ist;
- Bestimmen von Referenzerfassungsdaten umfassend zumindest Messwerte des Erfassungsbereichs (18), die ermittelt werden, wenn sich kein Objekt (20, 20', 20", 24, 24') in dem Erfassungsbereich (18) befindet und/oder der Erfassungsbereich (18) nicht von einer von der Beleuchtungseinheit ausgesandten Strahlung beaufschlagt ist; und
- Ermitteln von Modellobjekten (26, 26') auf der Grundlage der Objekterfassungsdaten und der Referenzerfassungsdaten, um Objekte (24, 24') in dem Erfassungsbereich (18) zu erfassen, wobei ein jeweiliges Modellobjekt (26, 26') ein jeweiliges Objekt (24, 24") in dem Erfassungsbereich (18) repräsentiert,
wobei die Messwerte (22) der Objekterfassungsdaten Distanzwerte und Intensitätswerte des Erfassungsbereichs (18) umfassen und wobei die Messwerte (22) der Referenzerfassungsdaten Referenzdistanzwerte und Referenzintensitätswerte des Erfassungsbereichs (18) umfassen, wobei die Referenzdistanzwerte durch Distanzwerte ermittelt werden, wenn sich kein Objekt (20) in dem Erfassungsbereich (18) befindet und wobei die Referenzintensitätswerte durch Intensitätswerte ermittelt werden, wenn der Erfassungsbereich (18) nicht von einer von der Beleuchtungseinheit ausgesandten Strahlung beaufschlagt ist,
wobei Differenzwerte bestimmt werden (38), die jeweils eine Differenz zwischen einem Distanzwert der Objekterfassungsdaten und einem Referenzdistanzwert der Referenzerfassungsdaten repräsentieren, und wobei die Ermittlung des jeweiligen Modellobjekts (26, 26') auf die Differenzwerte gestützt wird,
wobei Relativwerte auf der Grundlage einer vorbestimmten Relation zwischen Messwerten der Objekterfassungsdaten und Messwerten der Referenzerfassungsdaten bestimmt werden (42, 44), wobei die Differenzwerte mit den Relativwerten gewichtet werden (46, 48).

2. Verfahren nach Anspruch 1,
wobei für zumindest einige Bildpunkte des Bildsensors Relativintensitätswerte bestimmt werden (36), die jeweils für den betreffenden Bildpunkt ein Verhältnis zwischen einem Intensitätswert der Objekterfassungsdaten und einem Referenzintensitätswert der Referenzerfassungsdaten repräsentieren,
wobei die Ermittlung des jeweiligen Modellobjekts (26, 26') auf relative Objekterfassungsdaten gestützt wird, die auf der Grundlage zumindest einer vorbestimmten Relation von Messwerten (22) zwischen den Objekterfassungsdaten und den Referenzerfassungsdaten und unter Heranziehung der Relativintensitätswerte bestimmt werden.

3. Verfahren nach zumindest einem der vorherigen Ansprüche,
wobei die Differenzwerte einem ersten Schwellenwertfilter und/oder einem Faltungsfilter unterzogen werden (40),
wobei das erste Schwellenwertfilter bevorzugt dazu angepasst ist, die Differenzwerte zu binarisieren, und wobei das Faltungsfilter bevorzugt als Glättungsfilter ausgebildet ist.

4. Verfahren nach zumindest einem der vorherigen Ansprüche,
wobei die Relativwerte Relativdistanzwerte umfassen, die jeweils ein Verhältnis zwischen einem Differenzwert und einem Referenzdistanzwert der Referenzerfassungsdaten repräsentieren.

5. Verfahren nach zumindest einem der vorherigen Ansprüche,
wobei die Relativwerte Relativintensitätswerte umfassen, die jeweils ein Verhältnis zwischen einem Intensitätswert der Objekterfassungsdaten und einem Referenzintensitätswert der Referenzerfassungsdaten repräsentieren.

6. Verfahren nach zumindest einem der vorherigen Ansprüche,
wobei die Differenzwerte einem zweiten Schwellenwertfilter unterzogen werden (50),
wobei das zweite Schwellenwertfilter auf wenigstens einem Schwellenwert basiert, der konstant oder abhängig von den Objekterfassungsdaten und/oder den Referenzerfassungsdaten und/oder einer Bildpunktposition ist,
wobei das zweite Schwellenwertfilter bevorzugt dazu angepasst ist, die Differenzwerte zu binarisieren.

7. Verfahren nach zumindest einem der vorherigen Ansprüche,
wobei die Differenzwerte jeweils für einen zugeordneten Bildpunkt des Bildsensors bestimmt werden.

8. Verfahren nach zumindest einem der vorherigen Ansprüche,
wobei das jeweilige Modellobjekt (26, 26') auf der Grundlage der Differenzwerte ermittelt wird (52), wobei die Differenzwerte zu einer Karte zusammengefasst sind, die den Erfassungsbereich (18) repräsentiert, wobei die Karte einer Clusteranalyse, bevorzugt einem Bildsegmentierungsverfahren unterzogen wird, um das jeweilige Modellobjekt (26, 26') zu ermitteln, und wobei das jeweilige Modellobjekt (26, 26') bevorzugt dreidimensional ausgebildet ist.

9. Verfahren nach zumindest einem der vorherigen Ansprüche,
wobei das jeweilige Modellobjekt (26, 26') zumindest durch einige oder ausschließlich durch folgende Parameter definiert ist:
- Position des jeweiligen Modellobjekts (26, 26');
- wenigstens einen Größenparameter (54, 56, 58) des Modellobjekts (26, 26');
- minimaler Distanzwert der Bildpunkte, deren Differenzwerte dem jeweiligen Modellobjekt (26, 26') zugeordnet sind und/oder Position eines dem minimalen Distanzwert zugeordneten Raumpunkts (62);
- maximaler Distanzwert der Bildpunkte, deren Differenzwerte dem jeweiligen Modellobjekt (26, 26') zugeordnet sind und/oder Position eines dem maximalen Distanzwert zugeordneten Raumpunkts;
- Position eines einem maximalem Differenzwert zugeordneten Raumpunkts, wobei der maximale Differenzwert dem jeweiligen Modellobjekt (26, 26') zugeordnet ist und eine maximale Differenz zwischen einem Distanzwert der Objekterfassungsdaten und einem Referenzdistanzwert der Referenzerfassungsdaten repräsentiert;
- relative Anzahl von dem jeweiligen Modellobjekt (26, 26') zugeordneten Differenzwerten, die jeweils eine Differenz zwischen einem Distanzwert der Objekterfassungsdaten und einem Referenzdistanzwert der Referenzerfassungsdaten repräsentieren und größer einem vorbestimmten Schwellenwert sind.

10. Verfahren nach zumindest einem der vorherigen Ansprüche,
wobei die 3D-Kamera durch eine TOF-(time of flight)-Kamera gebildet ist.

11. Optischer Sensor (12), der wenigstens eine 3D-Kamera mit einer Beleuchtungseinheit, einem Bildsensor sowie einer Steuer- und Auswerteeinheit (14) aufweist,
wobei die Steuer- und Auswerteeinheit (14) dazu angepasst ist, das Verfahren nach zumindest einem der vorstehenden Ansprüche durchzuführen.

12. Optischer Sensor (12) nach Anspruch 11,
wobei die 3D-Kamera durch eine TOF-(time of flight)-Kamera gebildet ist.

13. Autonomes Fahrzeug (10, 10') mit einem optischen Sensor (12) nach Anspruch 11 oder 12,
wobei das Fahrzeug (10, 10') eine Antriebssteuerung (16) aufweist, die dazu angepasst ist, das Fahrzeug (10, 10') unter Berücksichtigung von ermittelten Modellobjekten (26, 26') zu steuern.

## Claims

1. A method for object detection using an optical sensor (12) which has least one 3D camera having an illumination unit and having an image sensor, wherein the optical sensor (12) is adapted to detect objects (20, 20', 20", 24, 24') in a detection zone (18) of the 3D camera on the basis of measurement values (22, 22', 22') of the detection zone (18), with the measurement values (22, 22', 22') being determined separately for individual picture elements of the image sensor;
wherein the method at least comprises the following steps:
- determining object detection data at least comprising measurement values (22, 22', 22") of the detection zone (18) which are determined when objects (20, 20', 20", 24, 24') are located in the detection zone (18) and the detection zone (18) is acted on by radiation transmitted by the illumination unit;
- determining reference detection data at least comprising measurement values of the detection zone (18) which are determined when no object (20, 20', 20", 24, 24') is located in the detection zone (18) and/or the detection zone (18) is not acted on by radiation transmitted by the illumination unit; and
- determining model objects (26, 26') on the basis of the object detection data and of the reference detection data to detect objects (24, 24') in the detection zone (18), with a respective model object (26, 26') representing a respective object (24, 24") in the detection zone (18);
wherein the measurement values (22) of the object detection data comprise distance values and intensity values of the detection zone (18), and wherein the measurement values (22) of the reference detection data comprise reference distance values and reference intensity values of the detection zone (18), wherein the reference distance values are determined by distance values when no object (20) is located in the detection zone (18), and wherein the reference intensity values are determined by intensity values when the detection zone (18) is not acted on by radiation transmitted by the illumination unit;
wherein difference values (38) are determined which each represent a difference between a distance value of the object detection data and a reference distance value of the reference detection data, and wherein the determination of the respective model object (26, 26') is based on the difference values; and
wherein relative values are determined on the basis of a predetermined relation between measurement values of the object detection data and measurement values of the reference detection data (42, 44), with the difference values being weighted (46, 48) with the relative values.

2. A method in accordance with claim 1,
wherein relative intensity values are determined (36) for at least some picture elements of the image sensor and each represent, for the respective picture element, a ratio between an intensity value of the object detection data and a reference intensity value of the reference detection data; and wherein the determination of the respective model object (26, 26') is based on relative object detection data which are determined on the basis of at least one predetermined relation of measurement values (22) between the object detection data and the reference detection data and using the relative intensity values.

3. A method in accordance with at least one of the preceding claims,
wherein the difference values are subjected to a first threshold value filter and/or to a convolution filter (40);
wherein the first threshold value filter is preferably adapted to binarize the difference values; and wherein the convolution filter is preferably configured as a smoothing filter.

4. A method in accordance with at least one of the preceding claims,
wherein the relative values comprise relative distance values which each represent a ratio between a difference value and a reference distance value of the reference detection data.

5. A method in accordance with at least one of the preceding claims,
wherein the relative values comprise relative intensity values which each represent a ratio between an intensity value of the object detection data and a reference intensity value of the reference detection data.

6. A method in accordance with at least one of the preceding claims,
wherein the difference values are subjected to a second threshold value filter (50);
wherein the second threshold value filter is based on at least one threshold value which is constant or is dependent on the object detection data and/or on the reference detection data and/or on a picture element position; and wherein the second threshold filter is preferably adapted to binarize the difference values.

7. A method in accordance with at least one of the preceding claims,
wherein the difference values are each determined for an associated picture element of the image sensor.

8. A method in accordance with at least one of the preceding claims,
wherein the respective model object (26, 26') is determined (52) on the basis of the difference values (52), with the difference values being combined into a map which represents the detection zone (18); wherein the map is subjected to a cluster analysis, preferably to an image segmentation method, to determine the respective model object (26, 26'); and wherein the respective model object (26, 26') is preferably three-dimensional.

9. A method in accordance with at least one of the preceding claims,
wherein the respective model object (26, 26') is defined by at least some of the following parameters or only by the following parameters:
- a position of the respective model object (26, 26');
- at least one size parameter (54, 56, 58) of the model object (26, 26');
- a minimum distance value of the picture elements whose difference values are associated with the respective model object (26, 26') and/or a position of a spatial point (62) associated with the minimum distance value;
- a maximum distance value of the picture elements whose difference values are associated with the respective model object (26, 26') and/or a position of a spatial point associated with the maximum distance value;
- a position of a spatial point associated with a maximum difference value, wherein the maximum difference value is associated with the respective model object (26, 26') and represents a maximum difference between a distance value of the object detection data and a reference distance value of the reference detection data; and
- a relative number of difference values associated with the respective model object (26, 26') which each represent a difference between a distance value of the object detection data and a reference distance value of the reference detection data and which are each greater than a predetermined threshold value.

10. A method in accordance with at least one of the preceding claims, wherein the 3D camera is formed by a TOF (time of flight) camera.

11. An optical sensor (12) which has at least one 3D camera having an illumination unit, an image sensor and a control and evaluation unit (14), wherein the control and evaluation unit (14) is adapted to perform the method in accordance with at least one of the preceding claims.

12. An optical sensor (12) in accordance with claim 11,
wherein the 3D camera is formed by a TOF (time of flight) camera.

13. An autonomous vehicle (10, 10') having an optical sensor (12) in accordance with claim 11 or claim 12,
wherein the vehicle (10, 10') has a drive control (16) which is adapted to control the vehicle (10, 10') while taking into account determined model objects (26, 26').

## Revendications

1. Procédé de détection d'objets à l'aide d'un capteur optique (12) qui présente au moins une caméra 3D avec une unité d'éclairage et un capteur d'image,
dans lequel le capteur optique (12) est adapté à détecter des objets (20, 20', 20", 24, 24') dans une zone de détection (18) de la caméra 3D sur la base de valeurs de mesure (22, 22', 22') de la zone de détection (18),
dans lequel les valeurs de mesure (22, 22', 22') sont déterminées séparément pour des pixels individuels du capteur d'image,
lequel procédé présente au moins les étapes suivantes consistant à :
- déterminer des données de détection d'objet comprenant au moins des valeurs de mesure (22, 22', 22') de la zone de détection (18) qui sont déterminées lorsque des objets (20, 20', 20", 24, 24') se trouvent dans la zone de détection (18) et que la zone de détection (18) est exposée au rayonnement émis par l'unité d'éclairage ;
- déterminer des données de détection de référence comprenant au moins des valeurs de mesure de la zone de détection (18) qui sont déterminées lorsqu'aucun objet (20, 20', 20", 24, 24') ne se trouve dans la zone de détection (18) et/ou que la zone de détection (18) n'est pas exposée au rayonnement émis par l'unité d'éclairage ; et
- déterminer des objets modèles (26, 26') sur la base des données de détection d'objet et des données de détection de référence pour détecter des objets (24, 24') dans la zone de détection (18), dans lequel un objet modèle respectif (26, 26') représente un objet respectif (24, 24") dans la zone de détection (18),
dans lequel les valeurs de mesure (22) des données de détection d'objet comprennent des valeurs de distance et des valeurs d'intensité de la zone de détection (18) et dans lequel les valeurs de mesure (22) des données de détection de référence comprennent des valeurs de distance de référence et des valeurs d'intensité de référence de la zone de détection (18), dans lequel les valeurs de distance de référence sont déterminées par des valeurs de distance lorsqu'aucun objet (20) ne se trouve dans la zone de détection (18) et les valeurs d'intensité de référence sont déterminées par des valeurs d'intensité lorsque la zone de détection (18) n'est pas exposée au rayonnement émis par l'unité d'éclairage,
dans lequel des valeurs de différence sont déterminées (38), qui représentent chacune une différence entre une valeur de distance des données de détection d'objet et une valeur de distance de référence des données de détection de référence, et dans lequel la détermination de l'objet modèle respectif (26, 26') est basée sur les valeurs de différence,
dans lequel des valeurs relatives sont déterminées (42, 44) sur la base d'une relation prédéterminée entre des valeurs de mesure des données de détection d'objet et des valeurs de mesure des données de détection de référence, dans lequel les valeurs de différence sont pondérées (46, 48) par les valeurs relatives.

2. Procédé selon la revendication 1,
dans lequel des valeurs d'intensité relatives sont déterminées (36) pour au moins quelques pixels du capteur d'image, qui représentent chacune, pour le pixel respectif, une relation entre une valeur d'intensité des données de détection d'objet et une valeur d'intensité de référence des données de détection de référence,
dans lequel la détermination de l'objet modèle respectif (26, 26') est basée sur des données de détection d'objet relatives déterminées sur la base d'au moins une relation prédéterminée de valeurs de mesure (22) entre les données de détection d'objet et les données de détection de référence et en utilisant les valeurs d'intensité relatives.

3. Procédé selon au moins l'une des revendications précédentes,
dans lequel les valeurs de différence sont soumises (40) à un premier filtre à valeur seuil et/ou à un filtre de convolution,
dans lequel le premier filtre à valeur seuil est de préférence adapté à binariser les valeurs de différence, et dans lequel le filtre de convolution est de préférence réalisé sous la forme d'un filtre de lissage.

4. Procédé selon au moins l'une des revendications précédentes,
dans lequel les valeurs relatives comprennent des valeurs relatives de distance qui représentent chacune un rapport entre une valeur de différence et une valeur de distance de référence des données de détection de référence.

5. Procédé selon au moins l'une des revendications précédentes,
dans lequel les valeurs relatives comprennent des valeurs relatives d'intensité qui représentent chacune un rapport entre une valeur d'intensité des données de détection d'objet et une valeur d'intensité de référence des données de détection de référence.

6. Procédé selon au moins l'une des revendications précédentes,
dans lequel les valeurs de différence sont soumises (50) à un second filtre à valeur seuil,
dans lequel le second filtre à valeur seuil est basé sur au moins une valeur seuil qui est constante ou dépendante des données de détection d'objet et/ou des données de détection de référence et/ou d'une position de pixel,
dans lequel le second filtre à valeur seuil est de préférence adapté à binariser les valeurs de différence.

7. Procédé selon au moins l'une des revendications précédentes,
dans lequel les valeurs de différence sont chacune déterminées pour un pixel associé du capteur d'image.

8. Procédé selon au moins l'une des revendications précédentes,
dans lequel l'objet modèle respectif (26, 26') est déterminé (52) sur la base des valeurs de différence, dans lequel les valeurs de différence sont regroupées en une carte qui représente la zone de détection (18),
dans lequel la carte est soumise à une analyse de cluster, de préférence un procédé de segmentation d'image, afin de déterminer l'objet modèle respectif (26, 26'), et dans lequel l'objet modèle respectif (26, 26') est de préférence tridimensionnel.

9. Procédé selon au moins l'une des revendications précédentes,
dans lequel l'objet modèle respectif (26, 26') est défini au moins par certains des paramètres suivants ou exclusivement par ceux-ci :
- position de l'objet modèle respectif (26, 26') ;
- au moins un paramètre de taille (54, 56, 58) de l'objet modèle (26, 26') ;
- valeur de distance minimale des pixels dont les valeurs de différence sont associées à l'objet modèle respectif (26, 26') et/ou position d'un point spatial (62) associé à la valeur de distance minimale ;
- valeur de distance maximale des pixels dont les valeurs de différence sont associées à l'objet modèle respectif (26, 26') et/ou position d'un point spatial associé à la valeur de distance maximale ;
- position d'un point spatial associé à une valeur de différence maximale, dans lequel la valeur de différence maximale est associée à l'objet modèle respectif (26, 26') et représente une différence maximale entre une valeur de distance des données de détection d'objet et une valeur de distance de référence des données de détection de référence ;
- nombre relatif de valeurs de différence associées à l'objet modèle respectif (26, 26'), qui représentent chacune une différence entre une valeur de distance des données de détection d'objet et une valeur de distance de référence des données de détection de référence et est supérieure à une valeur seuil prédéterminée.

10. Procédé selon au moins l'une des revendications précédentes,
dans lequel la caméra 3D est formée par une caméra TOF (time of flight).

11. Capteur optique (12) qui présente au moins une caméra 3D avec une unité d'éclairage, un capteur d'image ainsi qu'une unité de commande et d'évaluation (14),
dans lequel l'unité de commande et d'évaluation (14) est adaptée à mettre en oeuvre le procédé selon au moins l'une des revendications précédentes.

12. Capteur optique (12) selon la revendication 11,
dans lequel la caméra 3D est formée par une caméra TOF (time of flight).

13. Véhicule autonome (10, 10') équipé d'un capteur optique (12) selon la revendication 11 ou 12,
lequel véhicule (10, 10') présente une commande de propulsion (16) qui est adaptée à commander le véhicule (10, 10') en tenant compte d'objets modèles déterminés (26, 26').
